# EUROPEAN PATENT APPLICATION

(11) **EP 1 365 601 A1**
(43) Date of publication of application: **26.11.2003**
(21) Application number: 03101369.1
(22) Date of filing: 15.05.2003
(51) Int. Cl.: H04N 17/04

(54) **Method and apparatus for testing a video receiver**

(30) Priority: 22.05.2002 FR 0206331
(71) Applicant: Thomson Licensing S.A., 92100 Boulogne Billancourt (FR)
(72) Inventor: LANGUEDOC, Thierry, 78610, Le Perray en Yvelines (FR); ROBERT, François, 92190, Meudon (FR)
(74) Representative: Bonnans, Arnaud

(57) **Abstract**

A device for receiving and/or for processing video signals (2) comprises a memory card reader (22) which receives a secure memory card (24) and a microprocessor (18) associated with the card reader (22) so as to communicate with the memory card (24).

A memory (30) associated with the microprocessor (18) contains at least one test program for the device and the secure memory card (24) contains at least one item of information relating to the execution of the test program.

## Description

The present invention relates to a device for receiving and/or for processing video signals, a memory card, an assembly composed of such a device and of such a card and a process for controlling such a device.

It is known practice to use a memory card to store parameters intended to configure the apparatus which reads the card.

With this in mind, patent application DE 40 18 811 proposes the use of a memory card for storing data and items of configuration information which are used as operating parameters by a generator of video test signals.

Patent application EP 0 606 287 for its part proposes the sending from a chip card in a digital decoder of customization data specific to the access provider in respect of whom the decoder is used.

Within the same context, patent application WO 99/22516 (or its priority application published as EP 0 914 001) proposes the storing in a memory card of a test program for digital decoders. In order to make the operation of this system secure, it is proposed that the program be at least partly encrypted by means of a private key.

To perform the test, the memory card is inserted into the digital decoder, the encrypted program is loaded into the memory of the decoder where it is decrypted by a public key known to the decoder, for example emanating from another memory card read in another card reader.

The invention proposes a novel solution for the testing of a device for receiving and/or for processing video signals, in which solution security can be ensured in a simplified but equally effective manner.

For this purpose, the invention proposes an assembly comprising a device for receiving and/or processing video signals and a memory card, in which the device comprises a memory card reader which receives the memory card and a microprocessor associated with the card reader so as to communicate with the memory card, and in which the memory card is a secure memory card.

According to other advantageous characteristics,
- the memory card contains information related to the testing of the device;
- the device comprises a memory associated with the microprocessor, the memory contains at least one test program for the device and the memory card contains at least one item of information relating to the execution of the test program;
- the memory card contains at least one parameter required for the execution of the test program;
- the reading of some at least of the information stored in the memory card is conditioned by the reception of a carrier code by the memory card.

The software installed in the device is thus made secure through intelligent access control. The invention therefore makes it possible to secure and to limit access and broadcasting of sensitive programs and to combat counterfeiting and piracy. The invention thus makes it possible in particular to control the quantity of copies broadcast. Furthermore, the invention makes it possible to customize the applications as a function of the user.

The invention also proposes a secure memory card able to be received in a card reader of a device for receiving and/or processing video signals comprising a memory associated with a microprocessor, the said card carrying at least one item of information relating to the execution of a test program, which item is stored in the said memory.

According to advantageous characteristics:
- the card contains at least one parameter required for the execution of the test program;
- the reception of a carrier code conditions the transmission of some at least of the information.

The invention proposes a secure memory card able to be received in a card reader of a device for receiving and/or processing video signals, the said card carrying at least one item of information pertaining to the testing of the device.

The invention therefore proposes a device for receiving and/or for processing video signals comprising a memory card reader and a microprocessor associated with the card reader comprising means for communicating with a secure memory card.

According to advantageous characteristics:
- input means are able to send the card reader a carrier code destined for the secure memory card;
- a memory associated with the microprocessor contains a test program and the microprocessor is able to receive from the secure memory card at least one item of information relating to the execution of the program.

The invention also proposes a process for controlling a device for receiving and/or processing video signals comprising a memory card reader in particular for the testing of the said device, comprising the following steps:
- reception of a code originating from an input means of the device;
- sending of the code to the memory card reader as carrier code destined for a secure memory card.

Advantageously, the process furthermore comprises the following steps:
- reception from the secure memory card of at least one item of information relating to the execution of a test program contained in the device;
- execution of the test program if and only if the said item of information is positive.

Preferably, the device is a digital decoder which is controlled by a user via the remote control (or the keypad) of the decoder and which can itself control an information display on a display device, for example a television connected to the decoder.

Other characteristics of the invention will become apparent in the light of the description of an exemplary embodiment of the invention given with reference to the appended figures, where:
- figure 1 represents the essential elements of a digital decoder, a memory card received in this digital decoder and a display apparatus linked to the digital decoder;
- figure 2 represents a possible organization of the data in the memory card of figure 1;
- figure 3 is a flowchart which describes the manner of operation of the digital decoder.

A digital decoder is a device for receiving video signals coded (in general according to the MPEG standard), multiplexed and modulated by a carrier for their transport by cable or in air (satellite or hertzian communication).

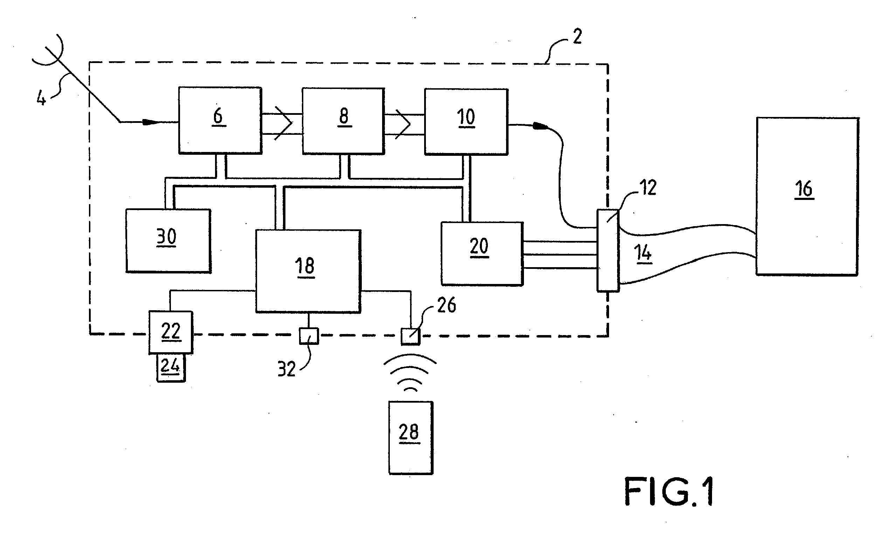

The digital decoder 2 represented in figure 1 receives signals from a symbolically represented antenna 4. The signals emanating from the antenna are sent to a tuner/demodulator assembly 6, often dubbed the *Front End.* The *Front End* 6 selects a signal received at a given frequency and sends this baseband signal to a demultiplexer 8 which extracts a digital data stream therefrom, for example according to the MPEG standard. This data stream is then translated into a video signal and into an audio signal by an audio/video decoder 10. To simplify the account, only the video signal emanating from the audio/video decoder is represented in Figure 1. This video signal (for example of the CVBS type) is despatched to a connector 12, for example a Scart socket, in order to be transmitted via a cable 14 then displayed on a display apparatus 16, for example a television.

The various electronic circuits of the digital decoder 2, such as the *Front End* 6, the demultiplexer 8 and the audio/video decoder 10, work under the control of a microprocessor 18. The digital decoder also comprises an OSD generator 20 which makes it possible to generate, as a function of instructions received from the microprocessor 18, a second video signal (representing for example a still image) to be superimposed on the CVBS video signal. To do this, the OSD generator 20 can, for example transmit the second video signal in the form of three RGB signals on the RGB pins of the Scart socket 12.

Of course, other procedures may be used to superimpose the second video signal (based on data emanating from the microprocessor 18) onto the first video signal (emanating from the signal received by the digital decoder 2), such as for example the superposition of the two signals within the audio/video decoder 10; the result of the superposition may then for example be sent to the display apparatus 16 as RGB signals by the Scart socket.

A memory 30 (for example of the SDRAM type) contains the data used by the microprocessor 18, in particular the instructions *(software)* of the programs executed by the microprocessor.

A pushbutton 32 makes it possible to send a reinitialization instruction to the microprocessor 18 and therefore to reinitialize the digital decoder 2 as a whole.

The digital decoder 2 furthermore possesses a memory card reader 22 connected to the microprocessor 18 so as to allow an exchange of information between the microprocessor 18 and a memory card 24 inserted into the reader 22.

The digital decoder 2 finally exhibits an infrared interface 26 which receives infrared signals from a remote control 28 manipulated by the user of the digital decoder 2 and sends corresponding signals to the microprocessor 18.

To test the digital decoder (for example at the end of the manufacturing plant or during a maintenance operation), one proceeds as indicated hereinbelow.

Use is made of a memory card 24 which is a secure memory card, for example of the microprocessor card type, for which some at least of the data contained in the card can be read only after entering a correct carrier code (or PIN code where the abbreviation stands for *Personal Identification Number).*

The carrier code is for example a 4-digit secret code known only to the persons authorized to use a specific program (software) of the digital decoder 2, that is to say here to perform the tests.

The memory card 24 contains in particular the following information:
- a serial number;
- an identifier;
- a list which indicates which tests are to be performed, that is to say for each test an item of information which indicates whether the test program is to be executed (positive item) or not (negative item);
- values of key-parameters for the execution of the program or programs indicated as having to be performed in the list.

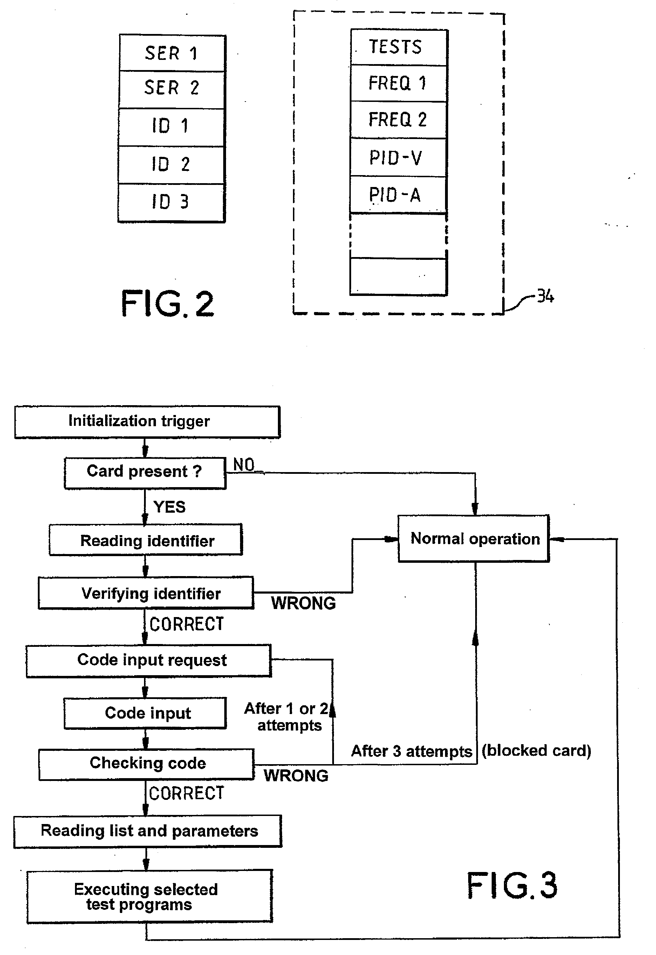

For example, the data contained in the secure memory card 24 are organized as represented in Figure 2.

The memory of the memory card 24 comprises a public part accessible by simple reading from the card 24 and a secure part 34 (symbolically delimited by the dashed line in Figure 2) accessible only after reception by the card 24 of the correct carrier code.

In the public part of the memory of the card 24 are stored:
- the serial number specific to the card 24 in the form of two bytes SER1 and SER2 (which allow better monitoring of the issuing of the cards);
- the identifier in the form of three bytes ID1, ID2, ID3 which represent for example the ASCII code of the initials TMM.

The identifier makes it possible to ensure that the card 24 is indeed intended for the testing of the digital decoders as is proposed by the invention.

In the secure part 34 of the memory of the card 24 are stored:
- the list of selected tests, that is to say those to be performed, in the form of a TESTS byte, each bit of which is an indicator used by the digital decoder to determine whether a test is to be executed, as described in detail subsequently;
- the parameters used during tests, including an item of frequency information coded on 2 bytes FREQ1 and FREQ2 as well as information relating to the number of the video channel (coded on 1 byte PID-V) and to the audio channel number (coded on 1 byte PID-A).

The parameters stored in the secure part 34 of the card 24 are required for the execution of the corresponding test program to the extent that these tests cannot be performed without access to the secure part 34, that is to say without the prior entry of the carrier code by the user.

Each bit of the TESTS byte corresponds to a test program (stored in the memory 30 of the digital decoder) as follows:
- bit B0 (RAM_TEST): testing of the memory 30;
- bit B1 (VIDEO_RAM_TEST): testing of the video memory (not represented) associated with the audio/video decoder;
- bit B2 (KDB): testing of the control panel (not represented);
- bit B3 (OSD): testing of the video inlay (OSD generator 20);
- bit B4 (FRONT END): testing of the *Front End* 6;
- bit B5 (MODEM_ID): testing of the identification of the modem (not represented);
- bit B6 (MODEM_CON): testing of the connection of the modem to a remote server;
- bit B7 (MODEM_TRANS): testing of the exchange of data between the modem and a remote server.

The memory card 24 is inserted into the reader 22 and the pushbutton 32 is pressed so as to reinitialize the decoder.

The program for initializing the decoder (executed by the microprocessor 18) then carries out the operations represented in Figure 3, of which the main ones in the account of the invention are the following:
- verification of the presence of a card in the reader 22;
- reading of the identifier (ID1, ID2, ID3) in the card 24;
- verification of the identifier (so as to ensure that the card 24 is indeed intended for the testing of the digital decoder 2 concerned);
- displaying on the apparatus 16 of a request for input of the carrier code by the user;
- awaiting of the carrier code input by the user (by way of the remote control 28 and of the infrared interface 28);
- sending of the carrier code to the card 24 (by way of the card reader 22);
- awaiting the agreement of the card 24 in respect of the reading of data from the secure part 34 of the memory of the card (which agreement is given only when the carrier code is correct);
- reading of the secure data from the card 24, in particular reading of the list which indicates which tests are to be performed and operating parameters;
- execution of the test programs stored in the memory 30 and which are indicated as having to be performed in the list with the aid of some at least of the parameters.

The test programs performed are therefore those (and only those) whose indicator bit (B0 to B7) stored in the card 24 equals 1.

For example, if the TESTS byte read from the card 24 has the hexadecimal value 10 (all the bits are 0 except B4), only the FRONT END test program is executed.

For its execution (that is to say in order to test the Front End 6), this test program uses the frequency parameters FREQU1, FREQU2 and channel parameters PID-V, PID-A read from the card 24. The microprocessor 18 therefore despatches the bytes FREQU1, FREQU2, PID-V and PID-A to the *Front End* as operating parameters and verifies the state of the *Front End* in return.

Provision may be made to use any type of test program, for example closed-loop, sequential tests or ones which introduce a menu.

It may be noted that the solution proposed by the invention does not afford any access from outside to the programs (software) stored in the memory 30 of the decoder 2 and avoids the loading of programs into the decoder 2; these two aspects effectively combat the piracy of the decoder 2.

## Claims

1. Assembly comprising a device for receiving and/or processing video signals (2) and a memory card (24),
in which the device (2) comprises a memory card reader (22) which receives the memory card (24) and a microprocessor (18) associated with the card reader (22) so as to communicate with the memory card (24),
and in which the memory card is a secure memory card (24).

2. Assembly according to Claim 1, in which the memory card (24) contains information (TESTS, FREQ1, FREQ2, PID-V, PID-A) related to the testing of the device.

3. Assembly according to Claim 1 or 2, in which the device comprises a memory (30) associated with the microprocessor (18), in which the memory (30) contains at least one test program for the device and in which the memory card (24) contains at least one item of information (TESTS) relating to the execution of the test program.

4. Assembly according to Claim 3 in which the memory card (24) contains at least one parameter (FREQ1, FREQ2, PID-V, PID-A) required for the execution of the test program.

5. Assembly according to one of Claims 1 to 4, in which the reading of some at least (34) of the information stored in the memory card (24) is conditioned by the reception of a carrier code by the memory card (24).

6. Secure memory card able to be received in a card reader (22) of a device for receiving and/or processing video signals (2) comprising a memory (30) associated with a microprocessor (18), the said card (24) carrying at least one item of information (TESTS) relating to the execution of a test program, which item is stored in the said memory (30).

7. Card according to Claim 6, containing at least one parameter (FREQ1, FREQ2, PID-V, PID-A) required for the execution of the test program.

8. Card according to Claim 6 or 7 in which the reception of a carrier code conditions the transmission of some (34) at least of the information.

9. Secure memory card able to be received in a card reader (22) of a device for receiving and/or processing video signals (2), the said card (24) carrying at least one item of information (TESTS) pertaining to the testing of the device (24).

10. Device for receiving and/or for processing video signals comprising a memory card reader (22) and a microprocessor (18) associated with the card reader (22) comprising means for communicating with a secure memory card (24).

11. Device according to Claim 10, in which input means (28, 26, 18) are able to send the card reader (22) a carrier code destined for the secure memory card (24).

12. Device according to Claim 10 or 11, in which a memory (30) associated with the microprocessor (18) contains a test program and in which the microprocessor (18) is able to receive from the secure memory card (24) at least one item of information (TESTS) relating to the execution of the program.

13. Process for controlling a device for receiving and/or processing video signals (2) comprising a memory card reader (22), in particular for the testing of the said device (2), comprising the following steps:
- reception of a code originating from an input means (28, 26, 18) of the device (2);
- sending of the code to the memory card reader (22) as carrier code destined for a secure memory card (24).

14. Process according to Claim 13, comprising the following steps:
- reception from the secure memory card (24) of at least one item of information (TESTS) relating to the execution of a test program contained in the device (2);
- execution of the test program if and only if the said item of information is positive.
